# EUROPEAN PATENT APPLICATION

(11) **EP 3 506 714 A1**
(43) Date of publication of application: **03.07.2019**
(21) Application number: 18382157.8
(22) Date of filing: 09.03.2018
(51) Int. Cl.: H04W 74/02, H04W 74/08, H04W 84/12

(54) **WIRELESS COMMUNICATIONS SYSTEM AND ASSOCIATED METHOD**

(30) Priority: 27.12.2017 EP 17382909
(71) Applicant: Ikerlan, S. Coop., 20500 Mondragon (ES)
(72) Inventor: VAL BEITIA, Iñaki, 01008 VITORIA - GASTEIZ (ES); SEIJO GOMEZ, Oscar, 33401 AVILES (ES); CRUCES GARRETAS, Cristina, 48940 LEIOA (ES); TORREGO ARTOLA, Raul, 01002 VITORIA - GASTEIZ (ES); ARRIOLA BILBAO, Aitor, 20600 EIBAR (ES)
(74) Representative: Igartua, Ismael

(57) **Abstract**

Wireless communications system and associated method, wherein the system (100) comprises an access point (AP) and a plurality of nodes (N_RT, N_STA) communicating over a communications channel. The system (100) comprises means for causing the transmission of periodic management frames from the access point (AP), a super frame being defined between every two consecutive management frames, and means for dividing each superframe into at least a first time period reserved for transactions in which nodes (N_RT) with real-time requirements intervene and a second time period after the first time period without restrictions. The access point (AP) is configured for transmitting the management frames in a periodic manner, for occupying the communications channel before said period has elapsed as from the transmission of a management frame.

## Description

### TECHNICAL FIELD

The present invention relates to wireless communications systems and associated management methods.

### PRIOR ART

The most widespread wireless communications systems today are particularly focused on obtaining a very high raw bit rate. This is because the most common commercial applications require said bit rate. Therefore, different WLAN standards generated by the IEEE (IEEE 802.11) have focused on this characteristic.

However, the requirements present in another type of WLAN networks, such as industrial networks, have not been taken into account, and a communications system based on the 802.11 standard is not suitable for these applications. The main reasons behind these communications systems not being suitable for industrial applications are the following:
- The amount of information that is sent per packet is very small. The 802.11 standard is not very efficient for small packets, since the headers that are used occupy a large amount of airtime. With respect to the physical layer (PHY layer) of 802.11g, for example, the most efficient 802.11 standard for sending small packets, the + SIGNAL preamble occupies five OFDM symbols, whereas the data, depending on the length and modulation used, would occupy between 1 and 10 OFDM symbols.
- They do not assure the packets are transmitted before a given indicated time, but rather they are queued as they wait to be transmitted.

EP1530325A1 discloses a method of access to the medium in a WLAN environment, which is compatible with the 802.11 protocol. The environment comprises a wireless communications system with an access point and a plurality of nodes communicating with one another over a communications channel. The access point is configured for managing the wireless communications system by means of transmitting periodic management frames through said communications channel, a super frame being defined between every two consecutive management frames. Each super frame comprises a sub-division for the transmission of data from the nodes, with a first period of a given duration followed by a second period of a given duration. The first time period is reserved for the transmission of data from nodes with given characteristics, whereas the second period is not reserved for any particular node and can be used by any node that complies with the 802.11 standard, for example.

### DISCLOSURE OF THE INVENTION

The object of the invention is to provide a wireless communications system and a management method for a wireless communications system, as defined in the claims.

One aspect of the invention relates to a wireless communications system comprising at least one access point and a plurality of nodes communicating over a wireless communications channel (wireless network). The system comprises:
- means for causing the transmission of periodic management frames from the access point through the communications channel, a super frame being defined between every two consecutive management frames, and
- means for dividing each super frame into at least a first time period reserved for transactions between the access point and nodes with real-time requirements and comprising an access mechanism for accessing the given channel that is different from a standard access mechanism, and a second time period after the first time period with free access for any node (without restrictions).

In the context of the invention, transaction between an access point and a node must be interpreted as an exchange of one or more frames between the access point and the corresponding node. When it is indicated that the transaction is a transaction from a node or that said transaction originates in a node, it must be interpreted that the most relevant information (the data) is transmitted from the node, whereas when the transaction is performed from the access point or originates in the access point, said access point is what transmits the relevant information (in this case the nodes could transmit an acknowledgement of receipt or ACK, for example).

The communications system thereby allows conventional wireless communications (communications between the access point and nodes without real-time requirements), while at the same time it has been converted into a deterministic system by assuring the connections or transmissions of the nodes with real-time requirements, at a given time. This allows incorporating real-time wireless communications in environments where they could not be used up until now, such as certain industrial environments, where it is often critical to assure the transmission of information at given times. The proposed communications system can therefore replace the wiring (real-time Ethernet or industrial Ethernet communications), for example, with the advantages it entails.

In the system, the access point is configured for:
- transmitting the management frames with a given time period between two consecutive management frames,
- occupying the communications channel before said time period elapses as from the transmission of a management frame, and during a time interval equal to the time remaining since it occupies the channel until the time period is completed, and
- interfering with said communications channel during said time interval.

The prior art does not disclose any mechanism that assures that said periodicity is complied with in an exact manner. The proposed solution does assure said periodicity as a result of the prior control over the channel by the access point, which furthermore assures that the super frame also always commences at the same instant in time. This allows having a more reliable and efficient temporal control of communications over the communications channel, which allows assuring real-time transmissions of those nodes that do require it by knowing exactly when the time periods into which the super frames have been divided commence.

Another aspect of the invention relates to a method for the management of communications in a wireless communications channel between at least one access point and a plurality of nodes of a wireless communications system, comprising the steps of:
- transmitting periodic management frames from the access point, a super frame being defined between every two consecutive management frames,
- dividing each super frame into at least a first time period reserved for transactions between the access point and nodes with an access mechanism for accessing the given channel, and a second time period after the first time period.

The management frames are transmitted with a given time period between them, i.e., a predetermined time period elapses between two consecutive management frames. To that end, the access point is caused to occupy the channel once the second time period and any transaction commenced in said second time period have ended, and to interfere with said communications channel from that moment until a time period has elapsed as from the transmission of the previous management frame. The advantages that have been discussed for the system are thereby obtained with the method.

These and other advantages and features of the invention will become evident in view of the drawings and the detailed description of the invention.

### DESCRIPTION OF THE DRAWINGS

Figure 1 shows an embodiment of the wireless communications system of the invention, with an access point and a plurality of nodes.
Figure 2 shows an example of a periodic transmission through a communication channel of the system of Figure 1.
Figure 3 shows another embodiment of the wireless communications system of the invention, with a plurality of access points and a plurality of nodes, the access points furthermore being connected to one another and to a wired communications network with real-time characteristics by means of respective wiring.

### DETAILED DISCLOSURE OF THE INVENTION

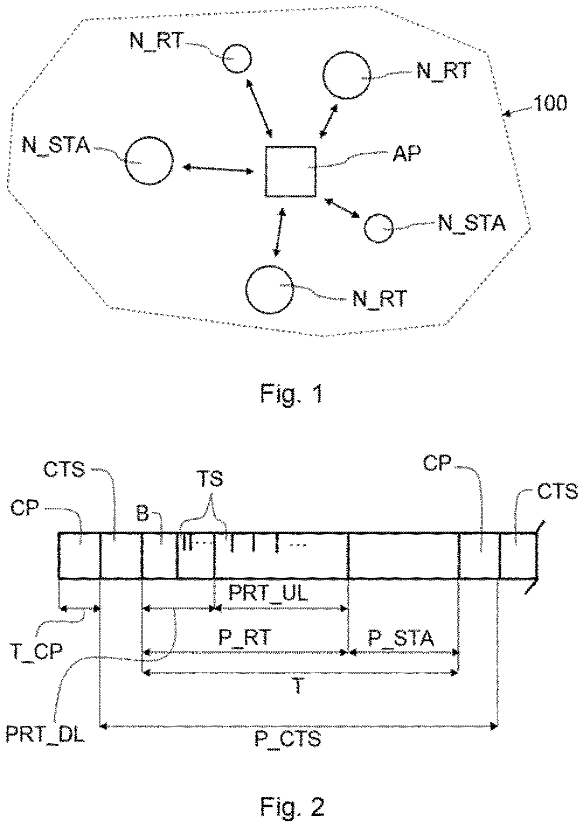

One aspect of the invention relates to a wireless communications system 100. The system 100 comprises at least one wireless access point AP and a plurality of nodes N_RT and N_STA, as shown in Figure 1, communicating with one another by means of a wireless communications channel (wireless network).

Each access point AP within a system 100 preferably has assigned thereto a radio frequency channel for communication between said access point AP and its respective nodes N_RT and N_STA, such that communications generated between each AP and its respective nodes do not interfere with one another in the event that there is a plurality of access points AP within a system 100 that are close enough to interfere with one another if they transmit over the same radio frequency channel.

The system 100 comprises means for causing the transmission of periodic management frames CTS from the access point AP, represented by way of example in Figure 2, a super frame T being defined between every two consecutive management frames CTS. The system 100 further comprises means for dividing each super frame T into at least a first time period P_RT reserved for transactions between the access point AP and nodes N_RT with real-time requirements and comprising an access mechanism for accessing the given channel that is different from a standard access mechanism, and a second time period P_STA after the first time period P_RT with free access for any node N_STA and N_RT and the access point AP (without restrictions).

Generally, standard nodes N_STA are nodes that are compatible with IEEE 802.11 standard protocol, whereas the nodes N_RT are compatible with a communications protocol that is different from the IEEE 802.11 standard protocol (but preferably based on said IEEE 802.11 standard protocol). Additionally, the nodes N_RT can also be compatible with IEEE 802.11 standard protocol, and they would choose which of the two protocols to use depending on the instant in time at which they are located within the current super frame T (in the second time period P_STA they would use the standard protocol, whereas in the first time period P_RT they would use the other protocol).

The mode of operation of the means will become evident below in view of the method of the invention.

The access point AP is configured for:
- transmitting the management frames CTS with a given time period P_CTS between two consecutive management frames CTS,
- occupying the communications channel once the second time period P_STA and any transaction commenced in said second time period P_STA have ended, and
- interfering with said communications channel from that moment until a time period P_CTS has elapsed as from the transmission of the previous or preceding management frame CTS.

In the invention, the term "occupy" must be interpreted as taking control of the channel, transmitting data or frames, or performing any action on the channel whereby interfering with said channel, during said time interval.

The access point AP comprises at least one node N_RT assigned, where it may comprise a plurality of nodes N_RT assigned. The nodes N_RT with real-time requirements generally comprise actuators or sensors that have to transmit/receive measures to/from the access point AP. Depending on the type of actuator and/or sensor, the corresponding node N_RT will have to transmit/receive its information with higher or lower periodicity. As a result, it is possible that in all the super frames T it may not be necessary to perform transactions from the access point AP to all the nodes N_RT or from all the nodes N_RT to the access point AP.

The system 100 comprises means for generating, in each super frame T, at least one synchronous segment TS for each node N_RT which has to perform a transaction with the access point AP during said super frame T (whether said transaction is originated from the access point AP to the corresponding node N_RT or from the corresponding node N_RT to the access point AP). The configuration for knowing which nodes N_RT have to be transmitted in which super frames T, as well as the creation and assignment of the synchronous segments TS, can be established upon initializing the system 100.

A synchronous segment TS is a time interval which is reserved for a node N_RT for the transmission of a frame of a node N_RT to the access point AP or vice versa. The time duration of said synchronous segment TS depends on the configuration of the frame which requires being transmitted in said synchronous segment TS. The configuration parameters of said frame are: its modulation and coding scheme (MCS), the bit length of the frame, and the communications protocol used for transmitting the frame.

Therefore, each node N_RT has its time reserved for transaction with the access point AP in the corresponding super frame T, compliance with real-time communication requirements thereby being assured. Preferably, the configuration and assignment of the synchronous segments TS also includes the modulation and coding scheme (MCS) and the bit length of the transactions. This allows saving when sending this information in each of the frames of each synchronous segment TS, with the advantage it entails: the frame is shorter, the synchronous segments TS are shorter, and a larger number of synchronous segments TS can be created. As discussed, this generation is preferably performed upon initializing the system 100, and it is pre-set for the corresponding super frames T, until the nodes N_RT assigned to the access point AP are modified or the configuration of the frames transmitted during any of the synchronous segments TS is modified according to conditions explained below.

The system 100 comprises means for dividing the first time period P_RT of the super frames T associated with said access point AP into two sub-periods PRT_DL and PRT_UL. The first sub-period PRT_DL is reserved for the transactions originated from the access point AP, whereas the second sub-period PRT_UL is reserved for the transactions originated from the nodes N_RT.

The means generating the synchronous segments TS required in a super frame T generate in the second sub-period PRT_UL a number of synchronous segments TS at least equal to the number of nodes N_RT that require a transaction in the corresponding super frame T, each of said nodes N_RT having at least one reserved or assigned synchronous segment TS in said second sub-period PRT_UL. All the nodes N_RT which require a transaction in said super frame T thereby have an assured time for transmitting the information they have to transmit to the access point AP, said time furthermore being specific and known (a given synchronous segment TS, the commencement of which is known by the corresponding node N_RT). In the event that the access point AP does not receive the transmission relative to a node N_RT when it should, said access point AP could request a retransmission from said node N_RT after the synchronous segments TS.

The means for generating the synchronous segments TS are preferably configured for generating, in a super frame T and for each node N_RT that requires performing transactions with the access point AP in said super frame T, a synchronous segment TS in the second sub-period PRT_UL, as discussed and during which the corresponding node N_RT transmits its data to the access point AP, but also at least one synchronous segment TS in the first sub-period PRT_DL for transactions originated in the access point AP, with the corresponding node N_RT.

The system 100 comprises means for dividing the first sub-period PRT_DL into two consecutive intervals. In the first interval, the access point AP transmits the information that is required to the nodes N_RT, and said nodes N_RT respond with an acknowledgement or ACK in the second interval. In that sense, the means for generating the synchronous segments TS generate at least one synchronous segment TS in said second interval for each of the nodes N_RT which require receiving information in said super frame T, thereby having established beforehand the instants in which each of them must transmit its acknowledgement or ACK. The access point AP can thereby easily know whether or not a node N_RT has acknowledged receipt of the information, for example. Furthermore, in the first interval, the access point AP can transmit all the information for all the nodes N_RT required in the corresponding super frame T grouped together in a single main frame B (which is explained below), or it can do so in a frame associated with each of said nodes N_RT. In this latter case, the means would also generate synchronous segments TS in the first interval, each of said synchronous segments TS being reserved for the transmission of the frame corresponding to each node N_RT from the access point AP. In the event that the access point AP does not receive the ACK relative to a node N_RT when it should, said access point AP could perform a retransmission to said node N_RT after the synchronous segments TS.

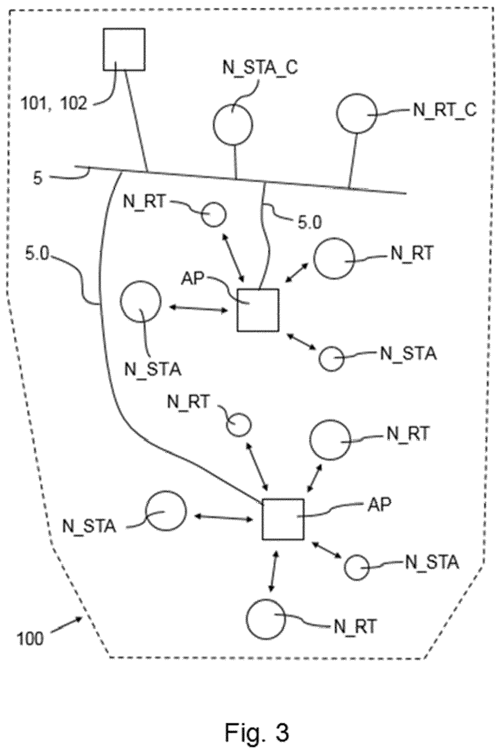

The system 100 may comprise a plurality of access points AP and a plurality of nodes N_RT and N_STA, as depicted in Figure 3 by way of example, each access point AP being configured for communicating with the nodes N_RT and N_STA assigned to said access point AP over its respective wireless communications channel, the communications channels being independent of one another. Each node N_RT is assigned to an access point AP, the system 100 comprising means for modifying the access point AP to which a node N_RT with real-time requirements is assigned when required. The mode of changing the assignment of a node N_RT will become evident hereinafter in view of the method of the invention.

Each access point AP can be connected to a real-time wired network 5 as depicted in the example of Figure 3, by means of a corresponding wiring 5.0, where the access points AP can thereby be communicated to one another by means of said wired network 5 should it be required. Each access point AP would be configured for transmitting the frames it receives from the nodes N_RT and N_STA to the wired network 5 in the event that the final recipient of said frames is located in the wired network 5, and for transmitting the frames it receives from the wired network 5 to the wireless network (corresponding wireless communications channel) in the event that the final recipient of said frames is located in the wireless network. The access point AP would therefore act as a bridge between the wireless network and the wired network 5. This allows implementing a more robust and faster communication between the access points AP, when required. Additionally, the wired network 5 may have connected thereto a plurality of nodes N_RT_C and N_STA_C that are compatible with a real-time wired communications protocol and a standard (not real-time) wired communications protocol, respectively. The nodes N_RT_C are similar to nodes N_RT in terms of functionality, but connected directly to the wired network 5, whereas the nodes N_STA_C are similar to nodes N_STA in terms of functionality, but connected directly to the wired network 5, although they would use a different communications protocol adapted to a wired connection.

The system 100 may further comprise a master clock 101 connected to the wired network 5. The master clock 101 is configured at least for communicating with the access points AP and other real-time elements of the network, such as nodes N_RT_C, for synchronizing them and so that they can obtain a precise temporal reference (a common time basis for both the master clock 101 and the access points AP). The access points AP act as a bridge with their respective nodes N_RT, and synchronize said nodes N_RT based on the synchronization indicated by the master clock 101. This causes all the nodes N_RT to be synchronized and referenced with the same temporal reference, such that they perform their transmissions, for example, at the times established to that end, without the risk of the communications of the different nodes N_RT interfering with one another. Without this synchronization, it is possible that, to mention two examples, the temporal references of two nodes N_RT of one and the same channel will be different, for example, such that their transmissions to the access point AP overlap, or the temporal references of a node N_RT and the access point AP will be different, which could lead to the access point AP not receiving the information coming from said node N_RT when it was expecting to receive it.

To that end, the access point AP is configured for sending the temporal reference for all the nodes N_RT in the payload of the main frame B. It is preferably performed in each super frame T, but another type of criterion could be established if it were considered appropriate.

The time it takes a frame to reach a node N_RT and N_STA from an access point, and vice versa, in a wireless communication is not known beforehand because the delay introduced by the wireless channel between the transmission and reception of a frame is not known. This delay can furthermore change between nodes N_RT and N_STA and/or over time. Although these delays in a short-medium range wireless channel are small, they can be taken into account to achieve more precise time synchronization than if the delay of the channel is not taken into account. As a result, a specific communication between the access point AP and each node N_RT is preferably established for the purpose of detecting or estimating said delay. This communication is preferably established after the second interval of the sub-period PRT_DL (ACK interval), but before the commencement of the sub-period PRT_UL of the corresponding super frame T in which said specific communication is performed. This communication can be similar to that which is performed with the commonly known Precision Time Protocol (PTP), or frames specific for the system 100 can be established.

In summary, synchronization can be performed independently of the number of access points AP present in the system 100, where it can even be carried out with a single access point AP. In the same way, synchronization can be performed independently of the generation of synchronous segments TS and/or divisions of the super frame T that are performed, always so that the transactions between an access point AP and each of its assigned nodes N_RT are performed based on the same temporal references in order to assure communication with real-time requirements.

Furthermore, the system 100 may comprise a network controller 102 connected to the wired network 5. The network controller 102 and the master clock 101 could be the same element if that were required. The function of the network controller 102 is to manage communications of the system 100, and to that end it controls the wireless and wired communications established by the access points AP comprised in the system 100 with their respective nodes N_RT and N_STA and with the wired network 5, respectively, and it also manages communications which are performed within the actual wired network 5. The expression "managing" communications" is understood as the network controller 102 indicating to the different elements of the system 100 when they must transmit and receive information to thereby have precise control over the flow of information in the elements of the network.

Another aspect of the invention relates to a management method for managing communications in a wireless communications channel between at least one access point AP and a plurality of nodes N_RT and N_STA of a wireless communications system 100, comprising the steps of:
- transmitting periodic management frames CTS from the access point AP, a super frame T being defined between every two consecutive management frames CTS,
- dividing each super frame T into at least a first time period P_RT and a second time period P_STA after the first time period P_RT.

The first time period P_RT is reserved for transactions between the access point AP and nodes N_RT with a given access mechanism, particularly for nodes N_RT with real-time requirements, to assure that said nodes N_RT perform their required transmissions. If a period of this type is not reserved, all the nodes N_RT and N_STA that can do it would try to access the communications channel, and it would not be assured that all the nodes N_RT could access said channel, at least not when required.

The second time period P_STA, however, is not reserved for any specific transaction associated with any node in particular, and all the nodes N_RT and N_STA and the access point AP can access the communications channel to perform their communications during said second time period P_STA, following the 802.11 standard or any other mechanism accepted in the channel. This allows the standard nodes N_STA, or those that do not have any type of additional requirement, to transmit data over the communications channel during the entire super frames T, despite the fact that said super frame T has a time period P_RT reserved for assuring transactions in which the nodes N_RT participate (and during which said standard nodes N_STA cannot participate in any transaction).

The management frames CTS are sent with a given time period P_CTS between them, i.e., a predetermined time period P_CTS elapses between two consecutive management frames CTS. To assure that this is the case, the access point AP is caused to occupy the communications channel before said time period P_CTS elapses as from the transmission of a previous management frame CTS, once the second time period P_STA and any transaction commenced in said second time period P_STA have ended, interfering with the channel from that moment until a time period P_CTS has elapsed as from the transmission of the management frame.

Once the super frame T (the second time period P_STA) has ended, a time interval CP of a duration T_CP equal to or greater than the duration of a standard transaction between a standard node N_STA and the access point AP is pre-established, said duration T_CP preferably being constant. As a result of the time interval CP and its minimum duration, it is assured on one hand that any transaction that has commenced in said second time period P_STA will be completed, and on the other hand it is assured at all times that no frame transmitted during a transaction that commenced in the second time period P_STA interferes with the first time period P_RT of the following super frame T (or with the management frame CTS either). The access point AP occupies the communications channel once the second time period P_STA has concluded and once the last standard transaction between a standard node N_STA and the access point AP which has commenced during said second time period P_STA and which can therefore occupy all or part of the time interval CP has ended.

In the method, furthermore, to deny access of the standard nodes N_STA to the channel during the first time period P_RT, the duration of the first time period P_RT (or its instant of ending) is indicated in the management frame CTS. The standard nodes N_STA thereby identify that the communications channel is going to be occupied during said time and will not be transmitting for the duration of the first time period P_RT, thereby preventing interferences with the frames transmitted during the first time period P_RT. Said indication is preferably performed in microseconds, there being a more accurate temporal control of communications.

To occupy the channel, the access point AP preferably transmits data or management frames according to the 802.11 standard, such that it could communicate with the nodes N_RT or N_STA assigned to said access point AP. The management frames can be management frames CTS (the time period P_CTS would not change). In this case, the instant of ending of the next time period P_RT (it would be in the following super frame T) could be indicated in the management frames CTS. It is thereby assured with a higher probability that all the nodes N_STA receive at least one management frame CTS and that the standard nodes N_STA do not interfere in the communications channel.

At least one additional mechanism is preferably implemented to assure to a larger extent the denial of access of the standard nodes N_STA to the channel during the first time period P_RT. With this mechanism, at the commencement of the first time period P_RT the access point AP transmits a main frame B, said main frame B comprising a preamble and a frame configuration field (including its bit length and modulation) which are compatible with the 802.11 standard, and a payload field in which data is transmitted (the name "payload" is conventionally used for frames of this type and it contains the data to be transmitted), and which is preferably compatible with a different protocol, but not with the 802.11 protocol. For example, in 802.11g, the configuration field would be the symbol SIGNAL. In the method, it is indicated by means of the configuration field that the duration of the data to be sent according to the standard is equal to the duration of the first time period P_RT, and a type of specific modulation could even be indicated for said data, such that the standard nodes N_STA are kept occupied in the attempt to demodulate the data read in the communications channel during said time interval, therefore not interfering in said channel. The information required for the corresponding nodes N_RT could be transmitted in the payload field of the main frame B, and as discussed for the first aspect of the invention, instead of a single main frame B it could also be performed by means of a frame specific for each node N_RT. Furthermore, the payload field of the main frame B could also contain management information that is relevant for all the nodes N_RT assigned to the access point AP which transmits said main frame B, such as a timestamp indicating the instant in which the main frame B has been transmitted. This information is preferably included at the beginning of the payload field of the main frame B. In this latter case, the nodes N_STA would likewise be kept occupied since the configuration field would continue to be sent.

Additionally, the method may include additional security to assure the denial of access of the standard nodes N_STA to the channel during the first time period P_RT, which is based on keeping the communications channel occupied during the entire first time period P_RT, such that the standard nodes N_STA would detect that the channel is occupied through the energy reading therein, and they would not interfere in it.

Therefore, different mechanisms are preferably implemented in the method to assure that no standard node N_STA interferes in the communications channel during the first time period P_RT, assuring to a greater extent that said first time period P_RT is reserved for transactions between the access point AP and the nodes N_RT (all the mechanisms would have to fail simultaneously in order for a standard node N_STA to be able to interfere in the channel).

Each access point AP comprises a number of nodes N_RT with real-time requirements assigned in one and the same communications channel, and as explained in greater detail for the first aspect of the invention, the transaction with at least one of them is required in each super frame T. At least a number of synchronous segments TS equal to the number of nodes N_RT with real-time requirements that require a transaction with the access point AP in the super frame T is generated in the method during the first time period P_RT of each super frame T.

In the method, the first time period P_RT of the super frames T associated with an access point AP is preferably divided into two consecutive sub-periods PRT_DL and PRT_UL, as has already been discussed above for the first aspect of the invention.

The first sub-period PRT_DL is reserved for transactions originated from the access point AP, whereas the second sub-period PRT_UL is reserved for transactions originated from the corresponding nodes N_RT.

With the method, a number of synchronous segments TS at least equal to the number of nodes N_RT that require a transaction in the corresponding super frame T is generated in the second sub-period PRT_UL, a synchronous segment TS being reserved or assigned for each of said nodes N_RT. All the nodes N_RT that require a transaction with the access point AP in said super frame T thereby have an assured time for transmitting the information they have to transmit to the access point AP, said time furthermore being specific and known (a given synchronous segment TS, the commencement of which is known by the corresponding node N_RT and by the access point AP). The access point AP thereby furthermore knows when it has to receive the information coming from each of the nodes N_RT, and no frame ACK is required when transactions are performed from the nodes N_RT. This involves a reduction in the time required for communications, with the advantage it entails.

At the end of the interval relative to the transactions, and in the event that the access point AP has not received all the frames corresponding to the messages sent by the nodes N_RT during the period PRT_UL, a retransmission of the data from the nodes N_RT to the access point AP could be performed. In this case, a retransmission management frame should be sent from the access point AP to the nodes N_RT from which retransmission is required. Said frame must contain the nodes N_RT that must retransmit, the generation of as many synchronous segments TS as required for performing the retransmission, and the configuration information of the frames that must be retransmitted by each of said nodes N_RT. Additionally, and should it be required, all or part of the period P_STA could be occupied in order to perform retransmissions relative to the period PRT_UL, although this would involve a reduction in the standard transaction capacity during said super frame T.

Preferably, in a super frame T and for each node N_RT that requires performing transactions with the access point AP in said super frame T, a synchronous segment TS is generated in the second sub-period PRT_UL, as discussed and during which the corresponding node N_RT transmits its data to the access point AP, but at least one synchronous segment is also generated in the first sub-period PRT_DL for transactions with the corresponding node N_RT originated in the access point AP.

In the method, the first sub-period PRT_DL is preferably divided into two consecutive intervals. In the first interval, the access point AP transmits the information that is required to the nodes N_RT, and said nodes N_RT respond with an acknowledgement or ACK in the second interval. Therefore, the means for generating the synchronous segments TS generate at least one synchronous segment TS in said second interval for each of said nodes N_RT, thereby having established beforehand the instants in which each of them must transmit its acknowledgement or ACK. The access point AP can thereby easily know whether or not a node N_RT has transmitted acknowledgement, for example. Furthermore, in the first interval, the access point AP can transmit all the information for all the nodes N_RT required in the corresponding super frame T in the payload of a single main frame B as discussed above, or it can do so in a frame associated with each of said nodes N_RT. In this latter case, synchronous segments TS would also be generated in the first interval, each of said synchronous segments TS being reserved for the transmission of the frame corresponding to each node N_RT from the access point AP. At the end of the interval relative to the transmission of ACK, and in the event that the access point AP has not received an acknowledgement or ACK coming from a node N_RT when it should, a retransmission of the data from the access point AP to said nodes N_RT could be performed. In this case, a retransmission management frame should be sent from the access point AP to the corresponding nodes N_RT, including in its information the nodes N_RT which must receive the retransmission, the creation of as many synchronous segments TS as there are ACKs required, and the assignment of said synchronous segments TS to the corresponding nodes N_RT. These synchronous segments TS would only exist for the duration of the actual super frame T. Additionally, said retransmission frame could also include the creation of as many synchronous segments TS as needed for transmitting the data frames associated with each of the nodes N_RT requiring retransmission, or the access point AP could preferably retransmit the retransmission data in the actual retransmission management frame.

The method is preferably suitable for managing communications in wireless communications systems 100 comprising a plurality of access points AP, each access point AP managing the communication of nodes N_RT and N_STA over a respective communications channel. At least one of the access points AP comprises an assigned node N_RT, although preferably each of the access points AP comprises a plurality of assigned nodes N_RT.

Each access point AP is enabled to transfer the nodes N_RT assigned thereto to other access points AP. This is particularly advantageous when there are mobile nodes N_RT, because since they move then can enter the range of action of other access point AP other than the range assigned thereto with communication properties of higher quality. To that end, the quality of transactions between the nodes N_RT and their assigned access point AP is identified, preferably in a continuous manner, in the method; it is determined if the access point AP assigned to each node N_RT is the most suitable one depending on said identification; and the access point AP assigned to a node N_RT is changed if it is determined that the quality is not enough to keep it in the current access point AP (provided that it is considered a better quality if it communicates with another given access point AP). This change in turn requires a modification to the number of synchronous segments TS associated with said nodes N_RT and said access points AP affected by the change and comprised in the corresponding super frames T (the access point AP that takes on the new node N_RT would add the synchronous segments TS required for effecting the real-time transactions between the access point AP and said new node N_RT in the corresponding super frames T, whereas the other access point AP would eliminate the synchronous segments TS corresponding to said node N_RT in the corresponding super frames T, which has stopped performing transactions with it).

It is known in the sector how to detect the quality of a transmission, which can be detected depending on different parameters such as Packet Error Rate (conventional information in wireless communications), Bit Error Rate (conventional information in wireless communications), power received or probability of fading, to mention some examples. A parameter considered appropriate can be used in the method (or even more than one parameter can be used to assure a more accurate estimation of the quality).

Both the access point AP and the nodes N_RT could identify the quality of the communications, although this is preferably a task of the nodes N_RT, and this is therefore reflected in this way in the text. Each node N_RT continuously monitors the quality of its communications with its assigned access point AP (the quality of what it receives from the access point AP), and indicates to said access point AP the need to be assigned to a new access point AP, if said quality is below a predetermined threshold, preferably if it is below a predetermined threshold during a minimum predetermined time interval. When the access point AP receives from a node N_RT the indication of the need for a change in assignment, said access point AP indicates to said node N_RT another given access point AP of the communications system 100 to which it can be assigned. Said another access point AP would transmit management frames CTS during the entire period P_STA of the following super frame T so that no node N_RT and N_STA assigned to said another access point AP may attempt to access the channel and so that said node N_RT which has the need for a change in access point AP can evaluate the quality of the communication with said another access point AP. Additionally, this operation could be performed during more than one super frame T so that said node N_RT can evaluate the quality of the communication with greater precision. In the event that the node N_RT determines that said another access point AP is not suitable (the quality of the communication is not enough), it would communicate this to the access point and the access point AP would indicate to said node N_RT another given access point AP until it finds one with a better quality of communication or until it does not find any other one, in which case the transfer would not be performed. In the event that the node N_RT determines that said another access point AP is suitable, it would communicate this to the access point AP and the latter would indicate to said another access point AP to modify the number of synchronous segments TS of the corresponding super frames T in order to take on said node N_RT. The communication between the access points AP and the nodes N_RT is wireless, with the corresponding wireless protocol, whereas the communication between the access points AP is performed by transmissions through physical media (wired network 5), with the protocol that is deemed appropriate. This method is very advantageous since it allows the communication between the nodes N_RT and an access point AP not to be cut off at any time, even when the node N_RT is mobile and is outside of the range of action of an access point AP with which it communicated at first.

The method is preferably suitable for managing and modifying the configuration of the frames to be transmitted during the transactions between at least one node N_RT with real-time requirements and the corresponding access point AP during the first time period P_RT of the corresponding superframes T, when required. Managing and modifying the configuration must be interpreted in the context of the invention as changing the modulation and coding scheme (MCS) of a frame transmitted during a synchronous segment TS within the period P_RT of the corresponding super frames T, in order to be adjusted to the capacity of the corresponding channel, and as modifying the bit length of a frame transmitted during said synchronous segment TS should it be required. Therefore, in a channel with a low communication quality, a low MCS must be used, which assures that the frame can be received with a high probability, whereas a channel with a high communication quality can use a higher MCS to reduce the duration of the synchronous segments TS (the higher the MCS, the shorter the duration of the frames transmitted in the synchronous segments TS, whereby the synchronous segments TS used for transmitting said frames have a shorter duration, whereby there is capacity for a larger number of synchronous segments TS or a higher capacity for retransmissions or for transmitting management frames).

Preferably, for managing and modifying the configuration, an access point AP is enabled to modify the configuration of the frames transmitted during the time period P_RT and thereby adjust the communication to the quality of the communications channel between each of the nodes N_RT assigned thereto and said access point AP. A quality is thereby achieved in the communication which can be adapted to the requirements of the application. To that end, the access point AP can transmit a modification management frame for modifying the configuration, preferably after the end of the ACK interval of the sub-period PRT_DL. The modification management frames contain at least the nodes N_RT which must modify the configuration of the frames transmitted during the assigned synchronous segments TS or the modification of the configuration of frames transmitted from the access point AP to the corresponding nodes N_RT in the first time period P_RT, the creation of as many synchronous segments TS as there are nodes N_RT affected by the change so that they can transmit their corresponding acknowledgements of receipt ACKs of the modification management frame (said synchronous segments would only exist in the super frame T in which the modification management frame is transmitted), and the actual modification information, which is the temporal position of the synchronous segments TS within the super frame T and the MCS and bit length of the frames transmitted in said synchronous segments TS. Furthermore, in the event that the data of the sub-period PRT_DL is sent grouped together in the main frame B, and the configuration of said main frame B required being modified, said reconfiguration would be indicated in the modification management frame in a manner similar to the preceding cases, and it would include the same information with the exception of the temporal position of the synchronous segments TS, as there are no assigned synchronous segments TS for the transmission of the main frame B, and it could additionally include the position of the information which is transmitted to each of the nodes N_RT assigned to said access point AP within the payload field of the main frame B.

For example, if a node N_RT is transmitting its information according to a given modulation and coding with a high MCS and it is detected that the quality is low, by means of the modification management frame it is indicated to said node N_RT that it must hereinafter use a different modulation and coding (with a lower MCS) to improve the quality of the transactions with said node N_RT. In this case, this would involve an increase in the duration of the transactions with said node N_RT as the length of the corresponding synchronous segment TS increases.

Additionally, the length of the periods P_RT and P_STA can be modified by means of the same method in order to be adjusted to the needs of the communication. Therefore, should it be required, the period P_STA can be reduced in order to increase the maximum number of synchronous segments TS supported by the period P_RT, or the period P_STA can be increased in order to increase the capacity of standard transactions.

As discussed, the system 100 may comprise a master clock 101 connected to the wired network 5, which is configured for communicating with at least the access points AP, for the purpose of at least synchronizing them with respect to one and the same temporal reference. Each access point AP is in turn configured for synchronizing all the nodes N_RT with respect to the temporal reference imposed by the master clock 101. To that end, in the method the access point AP sends the temporal reference for all the nodes N_RT in the payload of the main frame B. It is preferably performed in each super frame T, but another type of criterion could be established if it were considered appropriate.

As discussed above, in the case of the nodes N_RT it is important to have the mentioned synchronization, and to that end achieving a more precise synchronization is important furthermore taking into account the delay caused by the wireless channel between the transmission and reception of the frame. As a result, a specific communication is preferably established between the access point AP and each node N_RT for the purpose of detecting or estimating said delay. This communication is preferably established after the second interval of the sub-period PRT_DL (ACK interval), but before the commencement of the sub-period PRT_UL of the corresponding super frame T in which said specific communication is performed. This communication can be similar to the communication performed with the commonly known Precision Time Protocol (PTP), or frames specific for the system 100 can be established.

In summary, the synchronization can be performed independently of the number of access points AP present in the system 100, as has also been discussed above.

The method can be adapted to the system 100 according to any of its embodiments and/or configurations. Therefore, the description of the method that is useful for the system 100 is also valid for said system 100, and vice versa.

## Claims

1. Wireless communications system comprising at least one access point (AP) and a plurality of nodes (N_RT, N_STA) communicating over a wireless communications channel, the system (100) comprising:
- means for causing the transmission of periodic management frames (CTS) from the access point (AP) through the channel, a super frame (T) being defined between every two consecutive management frames (CTS), and
- means for dividing each super frame (T) into at least a first time period (P_RT) reserved for transactions between the access point (AP) and nodes (N_RT) with real-time requirements and comprising an access mechanism for accessing the given channel that is different from a standard access mechanism, and a second time period (P_STA) after the first time period (P_RT) with free access for any node (N_STA, N_RT),
**characterised in that** the access point (AP) is configured for transmitting the management frames (CTS) with a given time period (P_CTS) between two consecutive management frames (CTS), for occupying the communications channel once the second time period (P_STA) and any transaction commenced in said second time period (P_STA) have ended, and for interfering with said communications channel from that moment until a time period (P_CTS) has elapsed as from the transmission of the preceding management frame (CTS).

2. System according to claim 1, wherein the access point (AP) comprises a plurality of nodes (N_RT) associated with real-time requirements and is configured for communicating with at least one of said assigned nodes (N_RT) in each super frame (T), the system (100) comprising means for generating at least a number of synchronous segments (TS) in the first time period (P_RT) of each super frame (T) equal to the number of said nodes (N_RT) with real-time requirements with which a transaction is required in the corresponding super frame (T), each of said nodes (N_RT) with real-time requirements comprising at least one synchronous segment (TS) reserved in the corresponding super frame (T) for transactions between the corresponding node (N_RT) with real-time requirements and the access point (AP).

3. System according to claim 2, comprising means for dividing the first time period (P_RT) of the super frames (T) associated with an access point (AP) into two sub-periods (PRT_DL, PRT_UL), the means for generating the synchronous segments (TS) in the first time period (P_RT) of each super frame (T) being configured for generating at least as many synchronous segments (TS) in each of said sub-periods (PRT_DL, PRT_UL) of the first time period (P_RT) as there are nodes (N_RT) with real-time requirements that require performing a transaction with the access point (AP) in the corresponding super frame (T), each of said nodes (N_RT) with real-time requirements comprising at least one synchronous segment (TS) reserved in each of the sub-periods (PRT_DL, PRT_UL) for the respective transactions between each of said nodes (N_RT) with real-time requirements and the access point (AP).

4. System according to any of claims 1 to 3, comprising a plurality of access points (AP), each access point (AP) being wirelessly communicated with corresponding nodes (N_RT, N_STA) over a respective communications channel, said communications channels being independent of one another.

5. System according to claim 4, wherein each node (N_RT) with real-time requirements is assigned to an access point (AP), the system (100) comprising means for modifying the access point (AP) assigned to a node (N_RT) with real-time requirements when required.

6. System according to any of claims 1 to 5, wherein each access point (AP) is connected by means of respective wiring (5.0) to a wired communications network (5) with real-time characteristics, where the access points (AP) can thereby be communicated to one another by means of said wired network (5) should it be required, and each access point (AP) being configured for acting as a bridge between the nodes (N_RT, N_STA) and the wired communications network (5).

7. Method for the management of communications in a wireless communications channel between at least one access point (AP) and a plurality of nodes (N_RT, N_STA) of a wireless communications system (100), comprising the steps of:
- transmitting periodic management frames (CTS) from the access point (AP), a super frame (T) being defined between every two consecutive management frames (CTS), and
- dividing each super frame (T) into at least a first time period (P_RT) reserved for transactions between the access point (AP) and nodes (N_RT) with real-time requirements and comprising an access mechanism for accessing the given channel that is different from a standard access mechanism, and a second time period (P_STA) after the first time period (P_RT) with free access for any node (N_STA, N_RT) and the access point (AP),
**characterised in that** the management frames (CTS) are transmitted with a given time period (P_CTS) between two consecutive management frames (CTS), causing the access point (AP) to occupy the communications channel once the second time period (P_STA) and any transaction commenced in said second time period (P_STA) have ended, and to interfere with said communications channel from that moment until a time period (P_CTS) has elapsed as from the transmission of the preceding management frame (CTS).

8. Method according to claim 7, wherein a time interval (CP) is pre-established between the second time period (P_STA) and the following management frame (CTS), the duration (T_CP) of said time interval (CP) being equal to or greater than the duration of a standard transaction between a standard node (N_STA) and the access point (AP), and preferably, being constant.

9. Method according to claim 7 or 8, wherein in the management frame (CTS) the duration of the first time period (P_RT) is indicated to prevent the standard nodes (N_STA) from interfering with the communications channel during said first time period (P_RT), and said indication is preferably performed in microseconds.

10. Method according to any of claims 7 to 9, wherein at the commencement of the first time period (P_RT) the access point (AP) transmits at least one main frame (B), said main frame (B) comprising a preamble, a configuration field, and a payload field, the preamble and the configuration field being compatible with the 802.11 standard, whereas the payload is preferably compatible with a different protocol but not with 802.11 standard protocol, and indicating in said configuration field to the standard nodes (N_STA) that the time duration of the main frame (B) is equal to the duration of the first time period (P_RT).

11. Method according to claim 10, wherein each access point (AP) comprises a number of nodes (N_RT) with real-time requirements assigned in one and the same communications channel, at least a number of synchronous segments (TS) equal to the number of nodes (N_RT) with real-time requirements assigned to said access point (AP) which require a transaction with said access point (AP) in the corresponding super frame (T) being generated during the first time period (P_RT) of each super frame (T), the transactions from each of said nodes (N_RT) being associated with a given synchronous segment (TS), and causing said synchronous segment (TS) to always start in the same instant within the first time period (P_RT).

12. Method according to claim 11, wherein the first time period (P_RT) of the super frames (T) associated with an access point (AP) is divided into two consecutive sub-periods (PRT_DL, PRT_UL) and at least as many synchronous segments (TS) are generated in each of said sub-periods (PRT_DL, PRT_UL) of the first time period (P_RT) as there are nodes (N_RT) with real-time requirements assigned to said access point (AP) that require a transaction with said access point (AP) in the corresponding super frame (T), each of said nodes (N_RT) associated with real-time requirements comprising at least one synchronous segment (TS) reserved in the first sub-period (PRT_DL) and a synchronous segment (TS) reserved in the second sub-period (PRT_UL) for transactions with the access point (AP).

13. Method according to claim 12, which is suitable for a wireless communications system (100) comprising a plurality of access points (AP), and which is suitable for managing communications between each access point (AP) and corresponding nodes (N_RT, N_STA) in respective communications channels, at least one of the access points (AP) comprising an assigned node (N_RT) with real-time requirements, and the quality of the communications performed between the nodes (N_RT) with real-time requirements and their assigned access point (AP) is identified, it is determined if the access point (AP) assigned to each node (N_RT) with real-time requirements is the most suitable one depending on said identification, and the access point (AP) assigned to a node (N_RT) with real-time requirements is changed if it is determined that the quality is not enough to keep it in the current access point (AP), the number of segments in the first period (P_RT) of the corresponding super frames (T) associated with each of the affected access points (AP) being modified.

14. Method according to claim 13, wherein each node (N_RT) with real-time requirements continuously monitors the quality of its communications with its assigned access point (AP), and indicates to said access point (AP) the need to be assigned to a new access point (AP), if said quality is below a predetermined threshold, preferably during a minimum predetermined time interval.

15. Method according to claim 14, wherein when the access point (AP) receives from a node (N_RT) with real-time requirements the indication of the need to be assigned to a new access point (AP), said access point (AP) indicates to said node (N_RT) with real-time requirements the communication channel of another given access point (AP) of the system (100) and indicates to said another access point (AP) to establish communication with said node (N_RT) with real-time requirements, said node (N_RT) with real-time requirements evaluating the quality of said communications and said node (N_RT) with real-time requirements indicating to the access point (AP) to which it is assigned whether or not the quality of the communications with said another access point (AP) is enough for a change in assignment, the access point (AP) indicating to said another access point (AP) to modify the number of segments of the first period (P_RT) of its super frames (T) in order to be assigned said node (N_RT) with real-time requirements, should the quality be enough for said change.

16. Method according to any of claims 13 to 15, which is suitable for managing and modifying the configuration of the frames to be transmitted during the transactions between at least one node (N_RT) with real-time requirements and the corresponding access point (AP) during the first time period (P_RT) of the corresponding super frames (T), when required, the modulation and coding scheme (MCS) of said frames being changed to that end in order to be adjusted to the capacity of the corresponding communications channel and/or the length of said frames being modified to that end, and said access point (AP) transmits to that end a corresponding modification management frame during the first sub-period (PRT_DL) of the first time period (P_RT) of said super frames (T), said modification management frame comprising at least the nodes (N_RT) with real-time requirement affected by the change, the creation of as many synchronous segments (TS) as there are nodes (N_RT) with real-time requirements that are affected by the modification and that are used to transmit an acknowledgement of receipt of said modification management frame by said nodes (N_RT) with real-time requirements, and the actual modification information, which refers to at least the temporal position of said synchronous segments (TS) within the super frame (T) and to the modulation and coding scheme (MCS) associated with the transmission of said frames, or it refers to the modification of the main frame (B) configuration information in the event that the data in the first sub-period (PRT_DL) is sent grouped together in the actual main frame (B), comprising at least the modulation and coding scheme (MCS) associated with the transmission of said main frame (B) and the position of the data assigned to each of the nodes (N_RT) with real-time requirements in said main frame (B).
